# EUROPEAN PATENT SPECIFICATION

(11) **EP 3 106 315 B1**
(45) Date of publication and mention of the grant of the patent: **21.08.2019**
(21) Application number: 16164157.6
(22) Date of filing: 07.04.2016
(51) Int. Cl.: B41M 7/00, G03G 15/00, G03G 21/00, G06K 15/02, G06K 15/00

(54) **IMAGE FORMING APPARATUS AND PRINTING METHOD**
BILDERZEUGUNGSVORRICHTUNG UND DRUCKVERFAHREN
APPAREIL DE FORMATION D'IMAGE ET PROCÉDÉ D'IMPRESSION

(30) Priority: 15.06.2015 US 201514739403
(43) Date of publication of application: 21.12.2016
(73) Proprietor: Kabushiki Kaisha Toshiba, Tokyo 105-8001 (JP); Toshiba TEC Kabushiki Kaisha, Tokyo 141-8562 (JP)
(72) Inventor: NAMURA, Osamu, Shinagawa-ku, Tokyo 141-8562 (JP)
(74) Representative: Fédit-Loriot

(56) References cited:
- US-A1- 2008 074 483
- US-A1- 2013 016 376
- US-A1- 2015 110 537

## Description

### FIELD

Embodiments described herein relate generally to an image forming apparatus and a printing method.

### BACKGROUND

There is known an apparatus equipped with a test printing function. A test printing is a printing for confirming a printing result in advance.

There is a case in which the result of the test printing does not meet the intended result of a user. In a case, a sheet on which the test printing is carried out is totally wasted.

In US20080074483 A1, disclosed is a sheet which can be reused by using a decolorizable ink.

### BRIEF DESCRIPTION OF THE DRAWINGS

Fig. 1 is a diagram illustrating a printing system equipped with an image forming apparatus according to an embodiment;
Fig. 2 is a block diagram of the image forming apparatus;
Fig. 3 is a diagram illustrating an example of the image forming apparatus;
Fig. 4 is a block diagram illustrating the functions of a control section;
Fig. 5 is a flowchart of a printing processing;
Fig. 6 is a flowchart of a test printing processing;
Fig. 7 is a sheet on which a mark is printed in a stapled scheduled place;
Fig. 8 is a sheet on which circles are printed in a drilled scheduled place;
Fig. 9 is an example of a confirmation screen;
Fig. 10 is an example of a printing setting screen; and
Fig. 11 is a sheet on which a dashed line is printed in a bent scheduled place.

### DETAILED DESCRIPTION

In accordance with an embodiment, an image forming apparatus comprises a printing section configured to be capable of carrying out at least a decoloring printing; an input section configured to receive a command from a user; a first print control section configured to control, in a case of receiving a printing command from the user, the printing section to decolor and print a printing subject image, and then wait until the command is input from the user; and a second print control section configured to control, in a case of receiving a command continuing printing from the user after the decoloring printing, the printing section to print the printing subject image.

The decoloring printing is carried out by using an ink capable of being decolored by means of applying heat more than a predetermined temperature (hereinafter, referred to as a "decoloring temperature"), emitting light including predetermined wavelength components such as ultraviolet and the like, and coating the ink containing predetermined components.

Preferably, the printing section is equipped with a first printing section configured to be capable of carrying out the decoloring printing.

Preferably, the first print control section is configured to control, in a case of receiving the printing command from the user, the first printing section to decolor and print the printing subject image, and then wait for the command from the user.

Preferably, the printing section is further equipped with a second printing section configured to be capable of carrying out a permanent printing.

Preferably, the second print control section is configured to control, in a case of receiving a command continuing printing from the user, the second printing section to carry out the permanent printing for the printing subject image.

The image forming apparatus may further comprise: a processing section configured to process a sheet on which the printing subject image is printed.

Preferably, the second print control section controls the processing section to process the sheet in a case in which a processing command to process the sheet is contained in the printing command and after printing the printing subject image on the sheet.

Preferably, the first print control section does not process the sheet at a scheduled place processed by the second print control section, and decolors and prints a preset mark.

Preferably, the processing section includes a stapler which staples the sheet; wherein the second print control section controls the processing section to staple the sheet in a case in which a command to staple the sheet is contained in the printing command and after printing the printing subject image on the sheet.

Preferably, the first print control section does not staple the sheet at a scheduled place stapled by the second print control section , and decolors and prints a preset mark.

Preferably, the processing section includes a hole puncher which drills the sheet.

The second print control section may control the processing section to drill the sheet in a case in which a command to drill the sheet is contained in the printing command and after printing the printing subject image on the sheet.

Preferably, the first print control section does not drill the sheet at a scheduled place drilled by the second print control section , and decolors and prints a preset mark.

The image forming apparatus may further comprise: a discoloring section configured to decolor the sheet decolored and printed.

Preferably, the first print control section controls the decoloring section to decolor the sheet used in the decoloring printing before the printing subject image is discolored and printed.

Preferably, the first print control section prints attention information for encouraging the user to pay attention, in addition to the printing subject image, on the sheet on which the printing subject image is decolored and printed.

Preferably, the printing section may be a permanent printing, in addition to the decoloring printing.

The first print control section may control to take the printing of the printing subject image as the decoloring printing, and take the printing of the attention information as the permanent printing.

Preferably, the image informing apparatus further comprises : a duplex printing unit configured to enable the first print control section and the second print control section to carry out a duplex printing by rotating the sheet.

Preferably, the first print control section prints the attention information on a surface opposite to a surface on which the printing subject image is printed in a case in which the printing command is a command of the duplex printing.

The present invention also relates to a printing method, comprising: controlling a printing section capable of carrying out at least a decoloring print to decolor and print a printing subject image in a case of receiving a printing command from a user, and then waiting until a command is input from the user; and controlling a printing section to print the printing subject image in a case of receiving a command continuing a printing from the user after the decoloring printing.

Herein, the embodiment of the present invention is described, as non-limiting examples, with reference to the accompanying drawings. The same or equivalent components are indicated with the same reference numerals in figures.

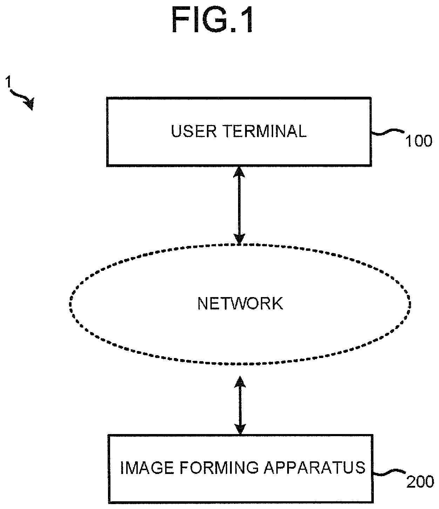

Fig. 1 is a diagram illustrating a printing system equipped with the image forming apparatus according to the embodiment. The printing system 1 includes a user terminal 100 and an image forming apparatus 200. The user terminal 100 and the image forming apparatus 200 are connected with each other via a network.

The user terminal 100 is a user operation terminal such as a personal computer and the like. The user terminal 100 communicates with the image forming apparatus 200 according to an instruction of the user.

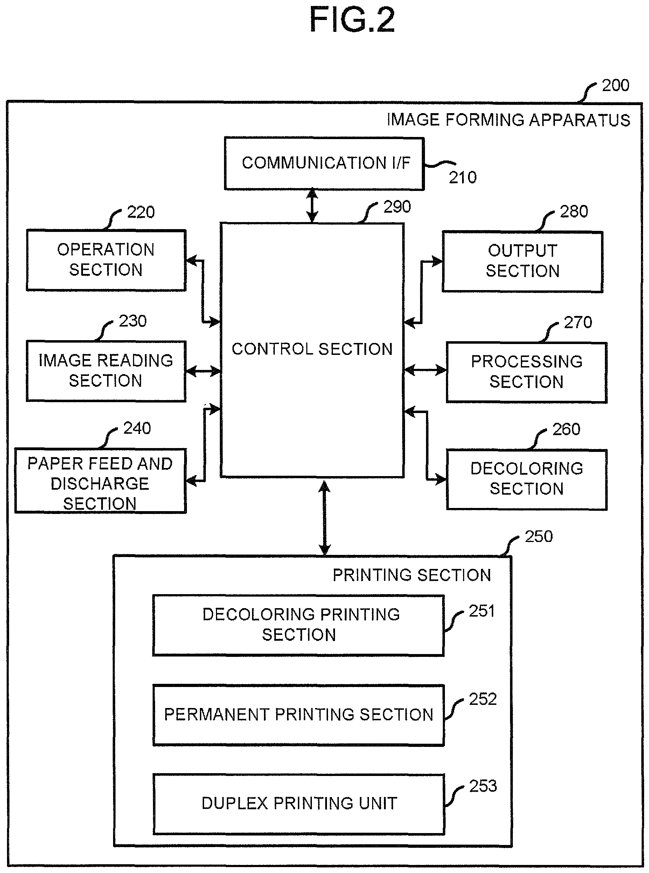

The image forming apparatus 200 is a printing device such as a copier and the like. The image forming apparatus 200 is equipped with, as shown in Fig. 2, a communication interface 210, an operation section 220, an image reading section 230, a paper feed and discharge section 240, a printing section 250, a decoloring section 260, a processing section 270 and an output section 280.

The communication interface 210 is a network connection interface for connecting the image forming apparatus 200 to the network. The communication interface 210 functions as an input section for receiving the printing command from the user who operates the user terminal 100. The communication interface 210 communicates with the user terminal 100 under the control of a control section 290.

The operation section 220 is a user interface such as a button, a switch, a touch panel and the like. The operation section 220 functions as an input section for receiving the printing command from the user. The operation section 220 notifies the control section 290 of the input of the user.

The image reading section 230 is an image capturing device such as a scanner, a camera and the like. The image forming apparatus 200 includes an automatic document feeder 232 which conveys sheets one by one loaded on a paper feed tray 231 to the image reading section 230. The image reading section 230 reads images from the sheets conveyed from the automatic document feeder 232 under the control of the control section 290.

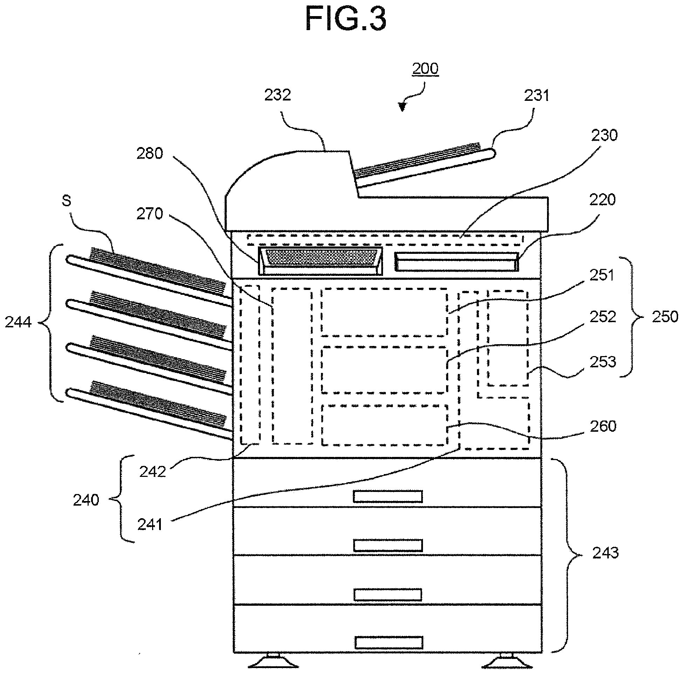

The paper feed and discharge section 240 is a device for feeding paper and discharging paper. Fig. 3 is an example of the image forming apparatus 200. The paper feed and discharge section 240 is equipped with a paper feed section 241 and a paper discharge section 242. The paper feed section 241 supplies sheets loaded on the paper feed tray 243 to the printing section 250. The image forming apparatus 200 includes a stacker 244 constituted by a plurality of paper discharge trays. The paper discharge section 242 discharges the sheet printed by the printing section 250 to anyone of the plurality of paper discharge trays.

The printing section 250 is a printing unit for carrying out printing on the sheet. The printing section 250 is equipped with a decoloring printing section 251, a permanent printing section 252 and a duplex printing unit 253.

The decoloring printing section 251 is a printing unit for printing an image on the sheet with the use of a decoloring ink. The decoloring printing section 251 is a first printing section of the image forming apparatus 200. The decoloring ink is an ink used for decoloring color through heat, light or chemical processing. For example, the decoloring ink is an ink discolored by means of applying heat more than at a decoloring temperature, emitting light including predetermined wavelength components such as ultraviolet and the like, and coating the ink containing predetermined components. Further, the decoloring ink contains not only a liquid ink, but also a powdered ink. The powdered decoloring ink can be rephrased as a decolorable toner. Hereinafter, a printing using the decoloring ink is called as a decoloring printing.

The decoloring printing section 251 is, for example, an electrophotographic type printing unit used in a laser printer or an LED (Light Emitting Diode) printer. The decoloring printing section 251 is equipped with an image carrier such as a photoconductive drum and the like, a transfer section which transfers a toner image developed on the image carrier to the sheet and a fixing section which fixes the toner image transferred to the sheet on the sheet through heating and pressure. The fixing section is constituted by a heat roller for heating to a fixing temperature and a pressure roller for applying pressure on the sheet.

The permanent printing section 252 is a printing unit for printing the image on the sheet with the use of a permanent ink. The permanent printing section 252 is a second printing section of the image forming apparatus 200. The permanent ink, which is not the decoloring ink, is a general ink. Further, the permanent ink contains not only the liquid ink, but also the powdered ink. The powdered ink can be rephrased as a permanent toner. Hereinafter, a printing using the permanent ink is called as a permanent printing.

The permanent printing section 252 is, for example, an electrophotographic type printing unit. The permanent printing section 252 is equipped with the image carrier, the transfer section and the fixing section similar to the decoloring printing section 251. Further, part of the decoloring printing section 251 may be the same mechanisms as that of the permanent printing section 252. For example, the decoloring printing section 251 and the permanent printing section 252 may both have the image carrier, the transfer section and the fixing section.

The duplex printing unit 253 is a unit for reversing the sheet. The duplex printing unit 253 enables the decoloring printing section 251 to print one side of the sheet and enables the permanent printing section 252 to print the other side of the sheet to realize the duplex printing of the sheet.

The decoloring section 260 uses the decoloring ink to erase the formed image (hereinafter referred to as a "decoloring image") from the sheet. For example, the decoloring section 260 is equipped with the heat roller for heating to the decoloring temperature and the pressure roller for applying the pressure on the sheet. The decoloring section 260 heats the sheet to erase the decoloring image on the sheet. Further, in a case in which the printing section 250 is the electrophotographic type printing unit, the fixing section contained in the printing section 250 may have the functions of the decoloring section 260. That is, the decoloring section 260 and the fixing section contained in the printing section 250 are the common mechanisms .

The processing section 270 processes the sheet printed by the printing section 250. The processing section 270 includes, for example, a stapler for stapling the sheet and a hole puncher for drilling the sheet. The processing section 270 staples or drills the sheet under the control of the control section 290.

The output section 280 outputs various kinds of information to the user. For example, the output section 280 is a display device such as a liquid crystal display and the like, or a sound generator such as a speaker and the like.

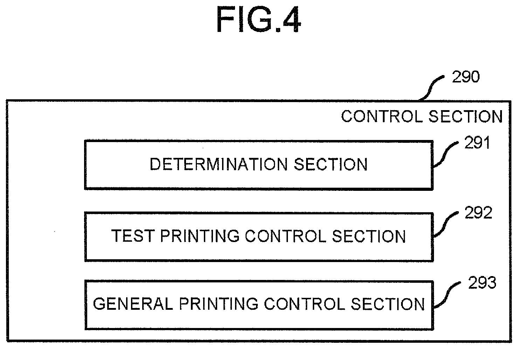

The control section 290 is a processing device such as a processor and the like. The control section 290 functions as a control device controlling the image forming apparatus 200. The control section 290 operates according to programs stored in an ROM (Read Only Memory) and an RAM (Random Access Memory) (not shown) to realize various operations containing a later described printing processing. The control section 290 operates according to the programs to function as a determination section 291, a test printing control section 292 and a general printing control section 293 as shown in Fig. 4. The control section 290 may be constituted by one processor or a plurality of processors . In a case of constituting the control section 290 with the plurality of processors, the control section 290 may realize the printing processing through cooperation with the plurality of processors.

Next, the operations of the image forming apparatus 200 with such a constitution are described.

If receiving the printing command from the user, the control section 290 starts the printing processing. The printing command is sent from the user terminal 100 or the operation section 220. For example, if the user sets a document on the paper feed tray 231 and presses a copy start button in the operation section 220, the image reading section 230 scans the document, and the operation section 220 sends the printing command of the scanned image for the control section 290. Further, if the user selects the printing subject image on the user terminal 100 and presses the print start button displayed on the user terminal 100, the user terminal 100 sends the printing command of the selected image to the control section 290 through the network. In the following description, image information and printing setting information are contained in the printing command.

The image information is the information of the printing subject image. If the printing command is sent from the operation section 220, the image information is the image scanned by the image reading section 230. If the printing command is sent from the user terminal 100, the image information is the image selected as a print target by the user on the user terminal 100.

The printing setting information is the information in which the setting of the printing executed by the general printing control section 293 is recorded. For example, the printing setting information is the information for determining that the printing executed by the general printing control section 293 is either the duplex printing or a simplex printing, and either the decoloring printing or the permanent printing. The printing setting is not limited to the information. For example, in the printing setting, the information for determining how many copies the number of print copies is, whether or not the processing of the sheet is executed, and whether or not the test printing is executed may be contained.

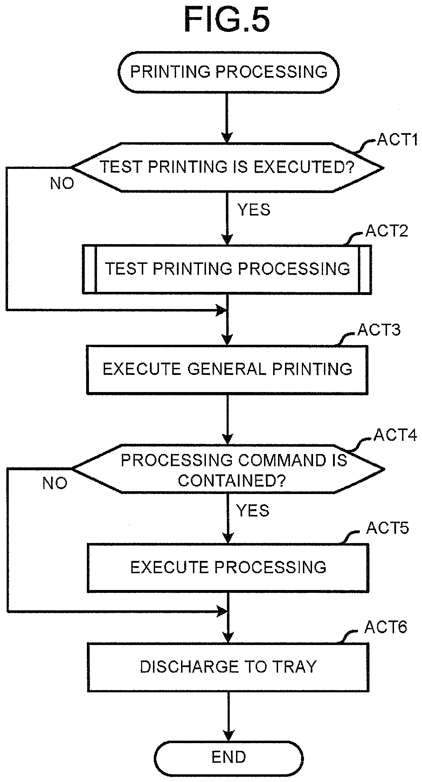

Hereinafter, the printing processing is described with reference to the flowchart in Fig. 5.

First, the determination section 291 determines whether or not the test printing is executed based on the setting information (ACT 1) . If the test printing is not executed (NO in ACT 1), the processing in ACT 3 is carried out.

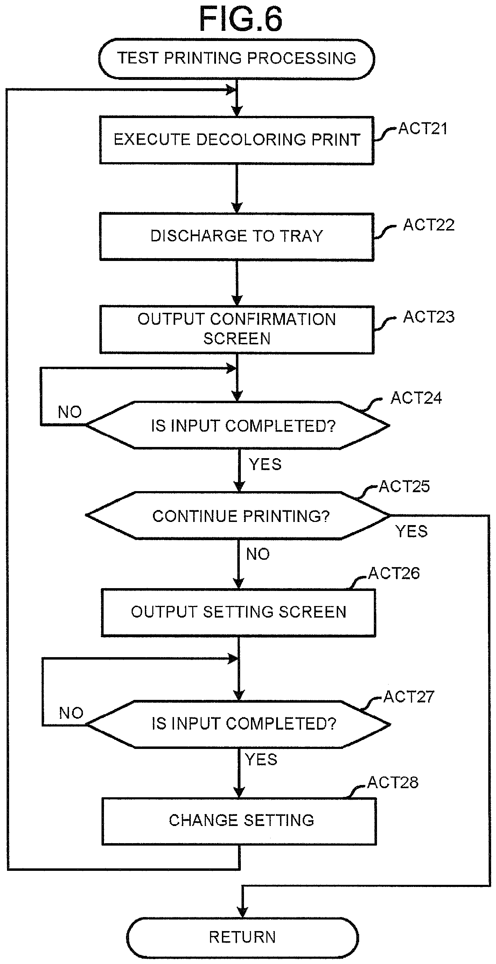

If the test printing is executed (YES in ACT 1), the test printing control section 292 starts the test printing processing (ACT 2) . Hereinafter, the test printing processing is described with reference to the flowchart in Fig. 6.

First, the test printing control section 292 controls the decoloring printing section 251 to decolor and print the printing subject image (ACT 21) . In a case in which the printing setting is turned into the duplex printing, the test printing control section 292 controls the duplex printing unit 253 to print image on the two sides of the sheet. The test printing control section 292, even if the printing setting is turned into the setting for printing multiple copies, prints only one copy without printing multiple copies.

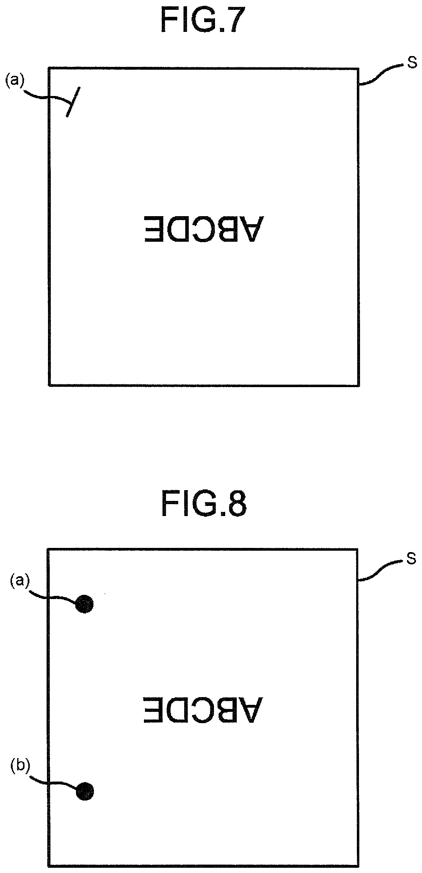

The test printing control section 292, even if the printing setting is turned into the setting for processing the sheet, does not process the sheet S and prints a mark at a scheduled place processed by the general printing control section 293 later. For example, if the printing setting is the stapling setting, the test printing control section 292 prints a line of which the length is the same as the staple, as (a) shown in Fig. 7, at a scheduled place stapled by the general printing control section 293. Further, if the printing setting is the setting for drilling the sheet, the test printing control section 292 prints circles of which the size is the same as punch holes, as (a) and (b) shown in Fig. 8, at a scheduled place drilled by the general printing control section 293.

If the decoloring printing is completed, the test printing control section 292 controls the paper discharge section 242 to discharge the sheet to any paper discharge tray on the stacker 244 (ACT 22).

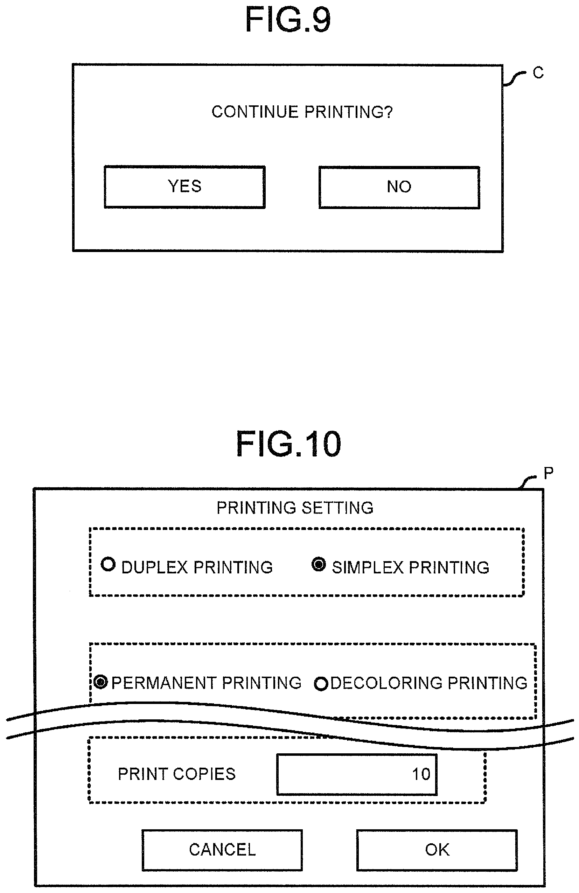

Next, the test printing control section 292 outputs a confirmation screen C to the output section 280 (ACT 23) . The confirmation screen C is a screen for confirming whether or not the printing in the current printing setting is continued towards the user. The Fig. 9 is an example of the confirmation screen C. If the printing command is sent from the operation section 220, the test printing control section 292 displays the confirmation screen C on the output section 280. If the printing command is sent from the user terminal 100, the test printing control section 292 commands the user terminal 100 to display the confirmation screen C on the display.

The test printing control section 292 determines whether or not there is an input from the user (ACT 24) . In the example of Fig. 9, the test printing control section 292 determines whether a "YES" button is pressed or a "NO" button is pressed by the user. If there is no input from the user (NO in ACT 24), the test printing control section 292 repeats the processing in ACT 24 until there is the input from the user.

If there is the input from the user (YES in ACT 24), the test printing control section 292 determines that the input from the user is either a printing continuation command or a printing interruption command (ACT 25). The printing continuation command is a command to continue the printing in the current printing setting. In the example of Fig. 9, when the user presses the "YES" button, the printing continuation command is sent to the control section 290 from the operation section 220 or the user terminal 100. The printing interruption command is a command to interrupt the printing. In the example of Fig. 9, when the user presses the "NO" button, the printing interruption command is sent to the control section 290 from the operation section 220 or the user terminal 100.

If the input from the user is the printing continuation command (YES in ACT 25), the test printing control section 292 terminates the test printing processing and returns the flowchart in Fig. 5.

In Fig. 7 and Fig. 8, the position of the staple and the position of the punch hole are unnatural. In this case, the user inputs the printing interruption command. In a case in which the input from the user is the printing interruption command (NO in ACT 25), the test printing control section 292 outputs a printing setting screen P to the output section 280 (ACT 26) . The printing setting screen P is a screen for changing the printing setting. Fig. 10 is an example of the printing setting screen P. If the printing command is sent from the operation section 220, the test printing control section 292 displays the printing setting screen P on the output section 280. If the printing command is sent from the user terminal 100, the test printing control section 292 commands the user terminal 100 to display the printing setting screen P on the display.

The test printing control section 292 determines whether there is an input from the user (ACT 27) . In the example of Fig. 10, the test printing control section 292 determines whether the "OK" button is pressed by the user. If there is no input from the user (NO in ACT 27), the test printing control section 292 repeats the processing in ACT 27 until there is the input from the user.

If there is the input from the user (YES in ACT 27), the test printing control section 292 changes the printing setting according to the information input to the printing setting screen P (ACT 28) . If the changing of the setting is completed, the test printing control section 292 returns the processing in ACT 21, and decolors and prints the image in the changed printing setting again.

Return to Fig. 5. The general printing control section 293 prints the image according the printing setting (ACT 3). If the printing setting is changed in ACT 28, the image is printed in the changed printing setting. If the printing setting is the permanent printing, the general printing control section 293 controls the permanent printing section 252 to carry out the permanent printing for the image. If the printing setting is the decoloring printing, the general printing control section 293 controls the decoloring printing section 251 to decolor and print the image.

The general printing control section 293 determines whether or not the printing setting is turned into the setting for processing the sheet (ACT 4). In a case in which the printing setting is not the processing setting (NO in ACT 4), the general printing control section 293 carries out the processing in ACT 6.

In a case in which the printing setting is the processing setting (YES in ACT 4), the general printing control section 293 controls the processing section 270 to process the sheet (ACT 5). For example, if the printing setting is the setting for stapling the sheet, the general printing control section 293 controls the stapler of the processing section 270 to staple the sheet. If the printing setting is the setting for drilling the sheet, the general printing control section 293 controls the hole puncher of the processing section 270 to drill the sheet.

If the printing is completed, the general printing control section 293 controls the paper discharge section 242 to discharge the sheet to the stacker 244 (ACT 6) . If the multiple copies are printed, the general printing control section 293 discharges each one copy to another paper discharge tray. If the discharge is completed, the control section 290 terminates the printing processing.

In accordance with the present embodiment, the test printing is the decoloring printing. Therefore, in a case in which the result of the test printing does not meet the intended result of the user, the user decolors the sheet and recycles the decolored sheet. And thus, the user does not waste the sheet through the test printing.

The each embodiment described above shows an example, and various modifications and applications are possible.

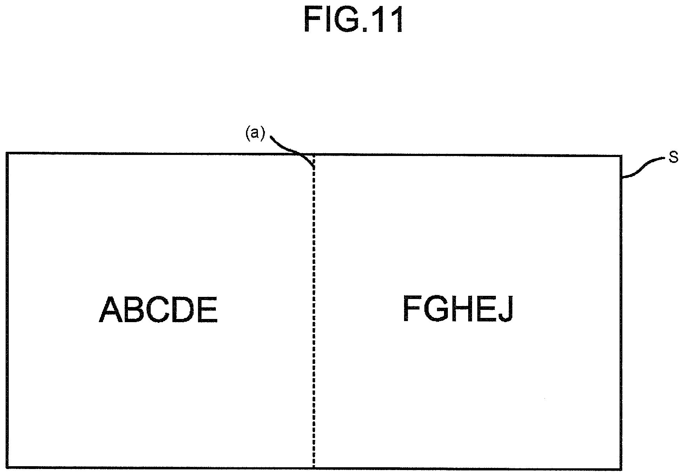

For example, in the embodiment described above, the processing section 270 is equipped with the stapler and the hole puncher; however, the processing section 270 may be equipped with a folding mechanism for bending the sheet. After the general printing control section 293 controls to print the image on the sheet, the processing section 270 bends the sheet based on the control of the general printing control section 293. At this time, the test printing control section 292 does not control to bend the sheet during the test printing, and controls to print a mark at a scheduled place where the general printing control section 293 controls to bend the sheet. For example, the test printing control section 292 controls to print a dashed line, as (a) shown in Fig. 11, at the scheduled place where the general printing control section 293 controls to bend the sheet. The processing section 270, which bends a plurality of sheets once, may be a binding mechanism for stapling the bent place. The binding mechanism is one form of the folding mechanism.

Further, the test printing control section 292, before executing the discoloring printing in ACT 21, controls the decoloring section 260 to decolor the sheet used in the test printing. The presence/absence of the execution of the decoloring processing may be determined based on the printing setting contained in the printing command. The test printing control section 292 picks up the sheet from a predetermined paper feed tray of the plurality of paper feed trays 243 to decolor the picked-up sheet, and sequentially, the test printing may be executed on the sheet subjected to the decoloring processing. The tray in which the sheet is picked up is, for example, a tray (hereinafter, referred to as a "designation tray") decided by the user when the sheet subjected to test printing is stored therein after the determination of the printing result. By simply storing the sheet subjected to test printing in the designation tray as it is, the decoloring processing and the test printing are automatically executed, and thus the time of the user can be saved.

The test printing control section 292 may be constituted by notifying the user that the printed sheet is the sheet subjected to test printing in order that the user does not wrongly use the sheet subjected to the test printing.

For example, the test printing control section 292, when discharging the sheet to the paper discharge tray in ACT 22, may control to output attention information to the output section 280. The attention information encourages the user to pay attention. For example, the attention information may indicate that the printed sheet is the sheet subjected to test printing, and may contain a message for encouraging the user to return the sheet to the designation tray after the confirmation of the printing result. The attention information may be character information displayed on the display, or may be a sound message output to a speaker. The attention information may be only a buzzer sound. In a case in which the printing command is sent from the user terminal 100, the test printing control section 292 may command the user terminal 100 to output the attention information.

Further, the test printing control section 292, when executing the discoloring printing in ACT 21, controls to print the attention information in addition to the printing subject image on the sheet. The attention information may be a character such as "Confidential" and the like. If the printing setting is the setting of the duplex printing, the attention information is printed on a surface opposite to a surface on which the printing subject image is printed. At this time, the test printing control section 292 may decolor and print either the printing subject image or the attention information, or may take the printing of the printing subject image as the decoloring printing and take the printing of the attention information as the permanent printing. Although the image on the discolored sheet is seemed to be disappeared, the discolorable toner is still left on the sheet. Therefore, in a case in which the user uses the sheet subjected to the test printing in the uses of the general printing and the like other than the test printing, it is afraid that the confidential information is revealed outside. However, because the printing of the attention information is the permanent printing, even if the user decolors the sheet, the attention information is not disappeared from the sheet. Thus, a miss, that is, the user mistakes the sheet subjected to the test printing and uses the sheet subjected to the test printing in the other uses other than the test printing, can be reduced.

In the embodiment described above, the printing section 250 is described as the electrophotographic type printing unit; however, the printing section 250 may be an inkjet system, a thermal system, a dot impact system and the like, and may be a printing unit other than the electrophotographic type.

The image forming apparatus 200 is described as the copier; however, the image forming apparatus 200 may be not equipped with a copy function, and only a printer.

While certain embodiments have been described, these embodiments have been presented by way of example only, and are not intended to limit the scope of the invention. Indeed, the novel embodiments described herein may be embodied in a variety of other forms.

## Claims

1. An image forming apparatus, comprising:
a printing section (250) configured to be capable of carrying out at least a decoloring printing;
an input section (220) configured to receive a command from a user;
a first print control section (292) configured to control, in a case of receiving a printing command from the user, the printing section (250) to decolor and print a printing subject image, and then waits until a next command is input from the user; and
a second print control section (293) configured to control, in a case of receiving a command continuing printing from the user after the decoloring printing, the printing section (250) to print the printing subject image, **characterized by**
the first print control section (292) configured to print attention information indicating that a sheet is confidential on the sheet for encouraging the user to pay attention, in addition to the printing subject image.

2. The image informing apparatus according to claim 1, wherein
the printing section (250) is equipped with a first printing section (251) configured to be capable of carrying out the decoloring printing and a second printing section (252) configured to be capable of carrying out a permanent printing; wherein
the first print control section (292) controls, in a case of receiving the printing command from the user, the first printing section (251) to decolor and print the printing subject image, and then waits for the command from the user; and
the second print control section (293) controls, in a case of receiving a command continuing printing from the user, the second printing section (252) to carry out the permanent printing for the printing subject image.

3. The image forming apparatus according to claim 1 or 2, further comprising:
a processing section (270) configured to process a the sheet on which the printing subject image is printed; wherein
the second print control section (293) controls the processing section (270) to process the sheet in a case in which a processing command to process the sheet is contained in the printing command and after printing the printing subject image on the sheet; and
the first print control section (292) does not process the sheet at a scheduled place processed by the second print control section (293), and decolors and prints a preset mark.

4. The image forming apparatus according to claim 3, wherein
the processing section (270) includes a stapler which staples the sheet; wherein
the second print control section (293) controls the processing section (270) to staple the sheet in a case in which a command to staple the sheet is contained in the printing command and after printing the printing subject image on the sheet; and
the first print control section (292) does not staple the sheet at a scheduled place stapled by the second print control section (293), and decolors and prints a preset mark.

5. The image forming apparatus according to claim 3 or 4, wherein
the processing section (270) includes a hole puncher which drills the sheet; wherein
the second print control section (293) controls the processing section (270) to drill the sheet in a case in which a command to drill the sheet is contained in the printing command and after printing the printing subject image on the sheet; and
the first print control section (292) does not drill the sheet at a scheduled place drilled by the second print control section (293), and decolors and prints a preset mark.

6. The image forming apparatus according to any one of claims 1 to 5, further comprising:
a discoloring section (260) configured to decolor the sheet decolored and printed; wherein
the first print control section (292) controls the decoloring section (260) to decolor the sheet used in the decoloring printing before the printing subject image is discolored and printed.

7. The image informing apparatus according to claims 1 to 6, wherein
the printing section (250) carries out a permanent printing, in addition to the decoloring printing; and
the first print control section (292) controls to take the printing of the printing subject image as the decoloring printing, and take the printing of the attention information as the permanent printing.

8. The image informing apparatus according to claim 7, further comprising:
a duplex printing unit (253) configured to enable the first print control section (292) and the second print control section (293) to carry out a duplex printing by rotating the sheet; wherein
the first print control section (292) prints the attention information on a surface opposite to a surface on which the printing subject image is printed in a case in which the printing command is a command of the duplex printing.

9. A printing method using the apparatus according to claim 1, comprising:
controlling a printing section (250) capable of carrying out at least a decoloring print to decolor and print a printing subject image in a case of receiving a printing command from a user, and then waiting until a command is input from the user; and
controlling a printing section (250) to print the printing subject image in a case of receiving a command continuing a printing from the user after the decoloring printing.

## Patentansprüche

1. Bilderzeugungsvorrichtung, umfassend:
einen Druckabschnitt (250), der so konfiguriert ist, dass er in der Lage ist, zumindest einen Entfärbungsdruck auszuführen;
einen Eingabeabschnitt (220), der konfiguriert ist, einen Befehl von einem Benutzer zu empfangen;
einen ersten Drucksteuerabschnitt (292), der konfiguriert ist, in einem Fall des Empfangens eines Druckbefehls von dem Benutzer, den Druckabschnitt (250) dahingehend zu steuern, ein Druckgegenstandsbild zu entfärben und zu drucken, und dann wartet, bis ein nächster Befehl von dem Benutzer eingegeben wird; und
einen zweiten Drucksteuerabschnitt (293), der konfiguriert ist, in einem Fall des Empfangens eines Druckfortsetzbefehls von dem Benutzer nach dem Entfärbungsdruck, den Druckabschnitt (250) dahingehend zu steuern, das Druckgegenstandsbild zu drucken,
**dadurch gekennzeichnet, dass** der erste Drucksteuerabschnitt (292) konfiguriert ist, Aufmerksamkeitsinformationen, die angeben, dass ein Blatt vertraulich ist, auf das Blatt zu drucken, um den Benutzer zu ermutigen, aufmerksam zu sein, und zwar zusätzlich zu dem Druckgegenstandsbild.

2. Bilderzeugungsvorrichtung nach Anspruch 1, wobei
der Druckabschnitt (250) mit einem ersten Druckabschnitt (251), der so konfiguriert ist, dass er in der Lage ist, den Entfärbungsdruck auszuführen, und einem zweiten Druckabschnitt (252) ausgestattet ist, der so konfiguriert ist, dass er in der Lage ist, einen Permanentdruck auszuführen; wobei
der erste Drucksteuerabschnitt (292) in einem Fall des Empfangens des Druckbefehls von dem Benutzer den ersten Druckabschnitt (251) dahingehend steuert, das Druckgegenstandsbild zu entfärben und zu drucken, und dann auf den Befehl von dem Benutzer wartet; und
der zweite Drucksteuerabschnitt (293) in einem Fall des Empfangens eines Druckfortsetzbefehls von dem Benutzer den zweiten Druckabschnitt (252) dahingehend steuert, den Permanentdruck für das Druckgegenstandsbild auszuführen.

3. Bilderzeugungsvorrichtung nach Anspruch 1 oder 2, ferner umfassend:
einen Verarbeitungsabschnitt (270), der konfiguriert ist, das Blatt zu verarbeiten, auf dem das Druckgegenstandsbild gedruckt wird; wobei der zweite Drucksteuerabschnitt (293) den Verarbeitungsabschnitt (270) dahingehend steuert, das Blatt in einem Fall zu verarbeiten, in dem ein Verarbeitungsbefehl zum Verarbeiten des Blattes in dem Druckbefehl enthalten ist und nachdem das Druckgegenstandsbild auf das Blatt gedruckt wurde; und
der erste Drucksteuerabschnitt (292) das Blatt nicht an einem geplanten Ort verarbeitet, der von dem zweiten Drucksteuerabschnitt (293) verarbeitet wird, und eine voreingestellte Markierung entfärbt und druckt.

4. Bilderzeugungsvorrichtung nach Anspruch 3, wobei
der Verarbeitungsabschnitt (270) einen Hefter enthält, der das Blatt heftet; wobei
der zweite Drucksteuerabschnitt (293) den Verarbeitungsabschnitt (270) dahingehend steuert, dass Blatt in einem Fall zu heften, in dem ein Befehl zum Heften des Blattes in dem Druckbefehl enthalten ist und nachdem das Druckgegenstandsbild auf das Blatt gedruckt wurde; und
der erste Drucksteuerabschnitt (292) das Blatt nicht an einem geplanten Ort heftet, der von dem zweiten Drucksteuerabschnitt (293) geheftet wird, und eine voreingestellte Markierung entfärbt und druckt.

5. Bilderzeugungsvorrichtung nach Anspruch 3 oder 4, wobei
der Verarbeitungsabschnitt (270) einen Locher enthält, der das Blatt locht bzw. durchbohrt; wobei
der zweite Drucksteuerabschnitt (293) den Verarbeitungsabschnitt (270) dahingehend steuert, das Blatt in einem Fall zu durchbohren, in dem ein Befehl zum Durchbohren des Blattes in dem Druckbefehl enthalten ist, und nachdem das Druckgegenstandsbild auf das Blatt gedruckt wurde; und
der erste Drucksteuerabschnitt (292) das Blatt nicht an einem geplanten Ort durchbohrt, der von dem zweiten Drucksteuerabschnitt (293) durchbohrt wird, und eine voreingestellte Markierung entfärbt und druckt.

6. Bilderzeugungsvorrichtung nach einem der Ansprüche 1 bis 5, ferner umfassend:
einen Entfärbungsabschnitt (260), der konfiguriert ist, das Blatt zu entfärben, das entfärbt und bedruckt wird; wobei
der erste Drucksteuerabschnitt (292) den Entfärbungsabschnitt (260) dahingehend steuert, das beim Entfärbungsdruck verwendete Blatt zu entfärben, bevor das Druckgegenstandsbild entfärbt und gedruckt wird.

7. Bilderzeugungsvorrichtung nach einem der Ansprüche 1 bis 6, wobei
der Druckabschnitt (250) zusätzlich zum Entfärbungsdruck einen Permanentdruck ausführt; und
der erste Drucksteuerabschnitt (292) dahingehend steuert, den Druck des Druckgegenstandsbilds als Entfärbungsdruck zu nehmen und den Druck der Aufmerksamkeitsinformationen als Permanentdruck zu nehmen.

8. Bilderzeugungsvorrichtung nach Anspruch 7, ferner umfassend:
eine Duplexdruckeinheit (253), die konfiguriert ist, den ersten Drucksteuerabschnitt (292) und den zweiten Drucksteuerabschnitt (293) zu befähigen, einen Duplexdruck durch Drehen des Blattes auszuführen; wobei
der erste Drucksteuerabschnitt (292) die Aufmerksamkeitsinformation auf eine Oberfläche gegenüber einer Oberfläche druckt, auf der das Druckgegenstandsbild gedruckt wird, und zwar in einem Fall, in dem der Druckbefehl ein Befehl des Duplexdrucks ist.

9. Druckverfahren, das die Vorrichtung nach Anspruch 1 verwendet, umfassend:
Steuern eines Druckabschnitts (250), der in der Lage ist, zumindest einen Entfärbungsdruck auszuführen, um ein Druckgegenstandsbild zu entfärben und zu drucken, in einem Fall des Empfangens eines Druckbefehls von einem Benutzer, und dann Warten, bis ein Befehl von dem Benutzer eingegeben wird; und
Steuern eines Druckabschnitts (250) dahingehend, das Druckgegenstandsbild in einem Fall des Empfangens eines Druckfortsetzbefehls von dem Benutzer nach dem Entfärbungsdruck zu drucken.

## Revendications

1. Dispositif de formation d'image, comprenant :
une section d'impression (250) configurée de manière à pouvoir mettre en oeuvre au moins une impression de décoloration ;
une section d'entrée (220) configurée de manière à recevoir une instruction à partir d'un utilisateur ;
une première section de commande d'impression (292) configurée de manière à commander, en cas de réception d'une instruction d'impression à partir de l'utilisateur, la section d'impression (250) afin de décolorer et d'imprimer une image à imprimer, puis à attendre qu'une instruction suivante soit entrée par l'utilisateur ; et
une seconde section de commande d'impression (293) configurée de manière à commander, en cas de réception d'une instruction de poursuite d'impression à partir de l'utilisateur après l'impression de décoloration, la section d'impression (250) afin d'imprimer l'image à imprimer, **caractérisé par** le fait
la première section de commande d'impression (292) est configurée de manière à imprimer des informations d'attention, indiquant qu'une feuille est confidentielle, sur la feuille afin d'encourager l'utilisateur à prêter attention, en plus de l'image à imprimer.

2. Dispositif de formation d'image selon la revendication 1, dans lequel
la section d'impression (250) est équipée d'une première section d'impression (251) configurée de manière à pouvoir mettre en oeuvre l'impression de décoloration et d'une seconde section d'impression (252) configurée de manière à pouvoir mettre en oeuvre une impression permanente ; dans lequel
la première section de commande d'impression (292) commande, en cas de réception de l'instruction d'impression à partir de l'utilisateur, la première section d'impression (251) afin de décolorer et d'imprimer l'image à imprimer, puis attend l'instruction de l'utilisateur ; et
la seconde section de commande d'impression (293) commande, en cas de réception d'une instruction de poursuite d'impression à partir de l'utilisateur, la seconde section d'impression (252) afin de mettre en oeuvre l'impression permanente de l'image à imprimer.

3. Dispositif de formation d'image selon la revendication 1 ou 2, comprenant, en outre :
une section de traitement (270) configurée de manière à traiter la feuille sur laquelle l'image à imprimer est imprimée ; dans lequel
la seconde section de commande d'impression (293) commande la section de traitement (270) afin de traiter la feuille dans un cas dans lequel une instruction de traitement destinée à traiter la feuille est contenue dans l'instruction d'impression et après l'impression de l'image à imprimer sur la feuille ; et
la première section de commande d'impression (292) ne traite pas la feuille à un emplacement prévu de traitement par la seconde section de commande d'impression (293), et décolore puis imprime un repère prédéfini.

4. Dispositif de formation d'image selon la revendication 3, dans lequel
la section de traitement (270) comporte une agrafeuse qui agrafe la feuille ; dans lequel
la seconde section de commande d'impression (293) commande la section de traitement (270) afin d'agrafer la feuille dans un cas dans lequel une instruction d'agrafage de la feuille est contenue dans l'instruction d'impression et après l'impression de l'image à imprimer sur la feuille ; et
la première section de commande d'impression (292) n'agrafe pas la feuille à un emplacement prévu d'agrafage par la seconde section de commande d'impression (293), et décolore puis imprime un repère prédéfini.

5. Dispositif de formation d'image selon la revendication 3 ou 4, dans lequel
la section de traitement (270) comporte une perforatrice qui perfore la feuille ; dans lequel
la seconde section de commande d'impression (293) commande la section de traitement (270) afin de perforer la feuille dans un cas dans lequel une commande de perforation de la feuille est contenue dans l'instruction d'impression et après l'impression de l'image à imprimer sur la feuille ; et
la première section de commande d'impression (292) ne perfore pas la feuille à un emplacement prévu de perforation par la seconde section de commande d'impression (293), et décolore puis imprime un repère prédéfini.

6. Dispositif de formation d'image selon l'une quelconque des revendications 1 à 5, comprenant, en outre :
une section de décoloration (260) configurée de manière à décolorer la feuille décolorée et imprimée ; dans lequel
la première section de commande d'impression (292) commande la section de décoloration (260) afin de décolorer la feuille utilisée dans l'impression de décoloration avant décoloration et impression de l'image à imprimer.

7. Dispositif de formation d'image selon les revendications 1 à 6, dans lequel
la section d'impression (250) met en oeuvre une impression permanente, en plus de l'impression de décoloration ; et
la première section de commande d'impression (292) commande de considérer l'impression de l'image à imprimer comme l'impression de décoloration et de considérer l'impression des informations d'attention comme l'impression permanente.

8. Dispositif de formation d'image selon la revendication 7, comprenant, en outre :
une unité d'impression duplex (253) configurée de manière à permettre à la première section de commande d'impression (292) et à la seconde section de commande d'impression (293) de mettre en oeuvre une impression duplex en faisant tourner la feuille ; dans lequel
la première section de commande d'impression (292) imprime les informations d'attention sur une surface opposée à une surface sur laquelle l'image à imprimer est imprimée dans un cas dans lequel l'instruction d'impression est une instruction de l'impression duplex.

9. Procédé d'impression en utilisant le dispositif selon la revendication 1, comprenant :
la commande d'une section d'impression (250) pouvant mettre en oeuvre au moins une impression de décoloration afin de décolorer et d'imprimer une image à imprimer en cas de réception d'une instruction d'impression à partir d'un utilisateur, puis l'attente qu'une instruction soit entrée par l'utilisateur ; et
la commande d'une section d'impression (250) de manière à imprimer l'image à imprimer en cas de réception d'une instruction de poursuite d'une impression à partir de l'utilisateur après l'impression de décoloration.
